## Europäisches Patentamt
## European Patent Office
## Office européen des brevets

(19)

(11) Publication number: **0 243 183**
**B1**

(12) # EUROPEAN PATENT SPECIFICATION

(45) Date of publication of the patent specification:
05.12.90

(51) Int. Cl.⁵: **A47D 13/04**

(21) Application number: **87303578.6**

(22) Date of filing: **23.04.87**

(54) Carriage.

(30) Priority: **24.04.86 US 855337**

(43) Date of publication of application:
**28.10.87 Bulletin 87/44**

(45) Publication of the grant of the patent:
**05.12.90 Bulletin 90/49**

(84) Designated Contracting States:
**DE ES FR GB IT**

(56) References cited:
**US-A- 3 090 470**
**US-A- 3 350 095**
**US-A- 3 903 513**
**US-A- 4 480 846**
**US-A- 4 579 359**

(73) Proprietor: **COSCO, INC., 2525 State Street, Columbus Indiana 47201(US)**

(72) Inventor: **Ku, Chol, 359 Ludlow Avenue, No. 15, Cincinnati Ohio 45220(US)**

(74) Representative: **Frost, Dennis Thomas et al, WITHERS & ROGERS 4 Dyer's Buildings Holborn, London, EC1N 2JT(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a brake system for a rolling carriage. More particularly, this invention relates to a baby walker equipped with a safety brake system for reacting to the presence of a ledge and inhibiting rolling movement of the baby walker on an underlying surface with respect to the ledge to help prevent the baby walker from rolling over the ledge.

Young children left unattended in conventional baby walkers are frequently injured in stairway and tip-over accidents. Oftentimes, a curious youngster will propel the baby walker right up to the top edge of a staircase, porch, patio, sidewalk, or the like. Further movement of the baby carriage past the edge at the urging of the youngster can tip the entire baby walker over the edge causing the seated youngster to fall down the stairway or the like with the baby walker and suffer unwanted injury.

It is already known from US-A 4 579 359 and US-A 4 480 846 to provide a self-propelled child vehicle such as a baby walker having a seat supported by a wheeled frame with a safety brake which can be manually lowered into engagement with a floor or other supporting surface where it prevents any rolling movement of the carriage.

A rolling carriage or baby walker equipped with a safety brake system for automatically inhibiting movement of such rolling carriages and walker significantly past a drop-off boundary edge of the underlying floor without requiring supervision or intervention by another person would aid in preventing dangerous tip-over situations and otherwise avoid shortcomings of known rolling carriages and walkers.

In accordance with the present invention, a carriage for rolling movement on an underlying surface, said carriage comprising a seat for carrying a child or other occupant, a base for supporting the seat and rolling means for rotatably supporting the base above the underlying surface, is characterised in that the rolling means is collapsible in response to movement of a portion of the rolling means over a boundary edge of the underlying surface to lower an adjacent portion of the base into frictional engagement with the underlying surface so that continued rolling movement of the carriage on the underlying surface is inhibited.

In preferred embodiments of the present invention, the carriage includes at least three rolling units pivotally coupled to the base in spaced relation about the circumference or periphery of the base. For example, the base could be of hexagonal shape. A pair of wheels is mounted in spaced-apart relation on each rolling unit to straddle the pivot axis of the rolling unit and to roll freely on the underlying surface. A high frictional pad is mounted on the base and presented toward the underlying surface for frictional engagement therewith.

In operation, movement of any one of the wheels over a boundary edge of the underlying surface to a point at least a predetermined distance below the plane of the underlying surface causes the rolling unit supporting such wheel to pivot from a normally horizontal rolling position to a pivoted position.

Such pivoting movement acts to lower the high friction pad or other elongated section of the base into frictional engagement with the underlying surface and lower the carriage. In addition, alarm means is desirably provided for indicating engagement of the high friction pad and the underlying surface following collapse of the carriage to alert nearby persons of such collapse by means of an audible signal.

The automatic braking feature provided by the collapsible carriage of the present invention advantageously provides means for detecting and reacting to the presence of a ledge and substantially inhibiting movement of an unsupervised carriage over the ledge. While the best mode of the invention known to the inventor involves a brake system for baby walkers, it is expected that such a feature has broader application, e.g., blocking movement of carriages or the like operated by visually-impaired persons or other handicapped persons generally unable to detect or react to the presence of drop-off ledges or the like.

Additional features and advantages of the invention will become apparent to those skilled in the art upon consideration of the following detailed description of preferred embodiments exemplifying the best mode of carrying out the invention as presently perceived.

Brief Description of the Drawings

The detailed description particularly refers to the accompanying figures in which:

Fig. 1 is a perspective view of a preferred embodiment of the present invention with portions of the base broken away to reveal a pair of pivotally mounted collapsible rolling units;

Fig. 2 is a side elevation view of the base in Fig. 1, with portions broken away, showing a pivotal rolling unit in its normal rolling position adjacent a boundary edge of an underlying surface;

Fig. 3 is a side elevation view of the base in Fig. 1 following collapse, with portions broken away, showing the pivotal rolling unit in its pivoted position and the base in frictional engagement with the underlying surface;

Fig. 4 is a schematic of an alarm circuit for indicating collapse of the embodiment of Fig. 1;

Fig. 5 is a diagrammatic view showing the base in a first position with respect to the adjacent boundary edge; and

Fig. 6 is a view similar to Fig. 5 showing the base in a second position with respect to the adjacent boundary edge.

Detailed Description of the Drawings

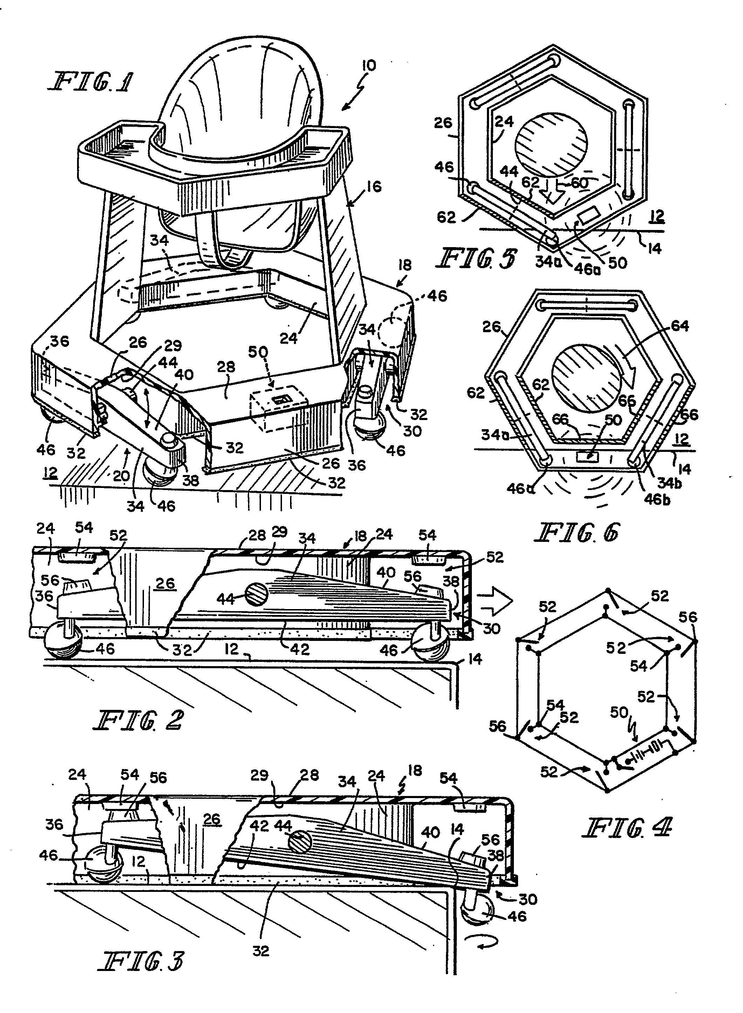

The novel construction of the present invention provides an automatic system for braking a carriage 10 rolling on an underlying surface or ledge 12 before a large portion of the carriage 10 rolls over a boundary ledge 14 of the underlying surface 12 causing the carriage 10 to tip over spilling the occupant or other contents of the carriage 10. As shown in Fig. 1, a carriage 10 in accordance with the present invention takes the form of a baby walker in preferred embodiments.

The carriage 10 includes a seat or other load-receiving assembly 16 of any suitable construction and a hollow base 18 for supporting the seat assembly 16. The hollow base 18 is a ring member formed of six integral hollow base sections. Three pivoting wheel assemblies 20 are pivotally mounted within the hollow base 18 to permit rolling movement of the base 18 on the underlying surface 12. As is known, the seat assembly of a baby walker can include a seat, legs, and a tray and is supported above the ground 12 so that the feet of a seated child are in contact with the ground, thus permitting the child to propel the baby walker.

Referring to Figs. 1-3, the hollow base 18 includes an inner wall 24, an outer wall 26, and a top wall 28 interconnecting the spaced-apart inner and outer walls 24, 26 to form a wheel assembly-receiving chamber 30 therebetween. The top wall 28 includes an interior surface 29. Each of the inner and outer walls 24, 26 include bottom surfaces presented toward the underlying surface 12. The base 18 further includes a high friction pad 32 mounted on these bottom surfaces to engage the underlying surface in a manner to be explained below.

In the illustrated embodiment, the hollow base 18 is hexagonally shaped to provide a stable seat-supporting platform shell for receiving at least three pivoting wheel assemblies in circumferentially spaced-apart relation. It will be appreciated that other geometric shapes including, but not limited to, circles, squares, rectangles, and triangles, can provide suitable base configurations for use in the present invention. The width of base 18 is selected to allow carriage 10 to pass through a standard 28-inch doorway.

Each wheel assembly 20 includes a pivoting support leg 34 having opposite distal ends 36, 38 and top and bottom surfaces 40, 42. Each support leg 34 is journaled for pivotal movement within the chamber 30 of one of the six hollow base sections on a pivot pin 44 interconnecting the inner and outer walls 24, 26 of such base section. A wheel or caster 46 is fixed to each of the opposite distal ends 36 and 38 of each support leg 34 to straddle the pivot pin 44 and to roll on the underlying surface 12.

In operation, pivoting wheel assemblies 20 collapse to lower an effective portion of the base 18 into frictional engagement with the underlying surface 12 whenever one of the wheels 46 is moved a sufficient distance beyond a boundary edge 14 of the ledge 12 to clear such boundary edge 14 by a child seated in carriage 10 as shown best in Figs. 2 and 3. In its normal rolling position shown in Fig. 2, the base 18, supported by wheel assemblies 20, is in rolling engagement with the underlying surface, and each pivoting support leg 34 is maintained in substantially horizontal spaced-apart parallel relation to the underlying surface 12. Following movement of one of the wheels 46 over a boundary edge 14 of the underlying surface 12 to a point at least a predetermined distance below the plane of the underlying surface 12, the pivoting support leg 34 of such wheel 46 pivots to its pivoted position shown in Fig. 3. The base 18 is lowered in response to sufficient pivoting movement of the support leg 34 to place a sufficient portion of high friction pad 32 into engagement with the underlying surface 12 to inhibit further movement of the carriage 10 with respect to the boundary edge 14.

The carriage 10 may also include a warning system to alert supervising adults or others that a portion of the carriage 10 has passed over a boundary edge 14 of the underlying surface 12. The warning system includes an alarm unit 50 having a power source and a pair of alarm switches 52 mounted on each pivoting support leg 34. Each alarm switch 52 includes an upper contact 54 mounted on the interior surface 29 of the top wall 28 and a lower contact 56 mounted on the top surface 40 of the support leg 34 in opposing relation to the upper contact 54. The schematic illustrated in Fig. 4 shows a preferred embodiment of a continuity circuit electrically coupling the alarm unit 50 and the six alarm switches 52. As shown best in Fig. 3, the warning system is activated when the upper contact adjacent to the trailing end of support leg 34 is lowered to contact the lower contact 56 mounted on the trailing end. In a preferred embodiment, the alarm unit 50 actuates an audible signal to indicate that the carriage 10 has passed a distance beyond a boundary edge 14 of a ledge 12 at the top of a staircase or the like in excess of a threshold safety amount.

One illustrative braking sequence is depicted in Figs. 5 and 6 to demonstrate how the brake system of the present invention inhibits movement of the carriage 10 with respect to a boundary edge 14. Once a leading wheel 46a of the carriage 10 moving in the direction indicated by arrow 60 passes over the boundary edge 14 in the manner described above, its support leg 34a is pivoted in a vertical plane about its pivot pin 44 to lower a first portion of high friction pad 32 into engagement with the underlying surface 12 and also to actuate alarm unit 50. A first engagement region 62 defined by the lowered first portion is represented by cross-hatching in one diagonal direction in Fig. 5. This friction generated by engagement of the first portion of the high friction pad 32 in the first engagement region 62 will inhibit movement of the carriage 10 in relation to the boundary edge 14 and cause the carriage 10 to rotate slightly about the engagement region 62 in the direction of arrow 64 should the child seated in carriage 10 continue to try and move the carriage 10 past the boundary edge 14 in the direction of arrow 60. Continued rotation of carriage 10 in the direction of arrow 64 will cause a second wheel 46b on an opposite support leg 34b to pass over the boundary edge 14 and lower a second portion of the high friction pad 32 into engagement with the underlying surface 12 to inhibit further movement of the carriage 10 in relation to the boundary edge 14. A second engagement region 66 defined by the lowered second portion is represented by cross-hatching in another diagonal direction in Fig. 6.

Although the invention has been described in detail with reference to certain preferred embodiments, variations and modifications exist within the scope of the invention as described and defined in the following claims.

## Claims

1. A carriage (10) for rolling movement on an underlying surface (12), said carriage comprising a seat for carrying a child or other occupant, a base (18) for supporting the seat and rolling means for rotatably supporting the base above the underlying surface, characterised in that the rolling means (20) is collapsible in response to movement of a portion of the rolling means over a boundary edge (14) of the underlying surface (12) to lower an adjacent portion of the base (18) into frictional engagement with the underlying surface so that continued rolling movement of the carriage (10) on the underlying surface is inhibited.

2. The carriage (10) of claim 1, wherein the portions of the base (18) adjacent to the rolling means include a high friction pad (32) for frictionally engaging the underlying surface (12) in response to collapse of the rolling means.

3. The carriage (10) of claim 1 or 2, wherein the rolling means (20) includes a plurality of support legs (34), each support leg being pivotally connected to the base (18) for movement about a pivot axis (44), and a pair of carriage wheels (46) fixed to each support leg in straddling relation to the pivot axis of the support leg, each support leg pivoting about its axis in response to movement of one of the carriage wheels over the boundary edge (14) of the underlying surface (12) to collapse the rolling means.

4. The carriage (10) of claim 3, wherein the support legs (34) are arranged on the base (18) in circumferentially spaced-apart relation.

5. The carriage (10) of claim 3 or 4, wherein each support leg (34) includes opposite distal ends (36, 38), one wheel (46) being fixed to each of the opposite distal ends in substantially equally spaced-apart relation to the pivot axis (44) of the support leg.

6. The carriage (10) of any preceding claim, wherein the base (18) is hexagonally shaped and the rolling means (20) includes three support legs (34) pivotally connected to the hexagonal base to lie in substantially triangular relation.

7. The carriage (10) of any preceding claim, further comprising alarm means (50) for indicating collapse of a portion of the rolling means to alert nearby persons that the portion of the rolling means has passed over the boundary edge (14) of the underlying surface (12).

8. The carriage (10) of claim 7, wherein the alarm means (50) includes sonic means for issuing an audible warning to nearby persons to indicate the collapse of the rolling means (20).

9. A carriage (10) according to claim 1, wherein the base (18) forms a part of frame means for elevating the seat above the underlying surface (12) to enable a seated occupant to touch the underlying surface to propel the carriage and said rolling means includes a plurality of wheel units (20).

10. The carriage (10) of claim 9, wherein the portion of the base includes a high friction pad (32) presented toward the underlying surface (12) for frictional engagement therewith.

11. The carriage (10) of claim 9 or 10, wherein each wheel unit (20) is pivotal about a central horizontal pivot axis (44) and its wheels (46) are mounted at opposite ends (36, 38) of the wheel unit in spaced-apart-relation to the central horizontal pivot axis.

12. The carriage (10) of any of claims 9 to 11, wherein the base (18) is a continuous ring member having an inner wall (24) and an outer wall (26) positioned in spaced-apart relation to the inner wall to define a chamber (30) therebetween and each coupling means includes a pivot pin (44) journaled to the inner and outer walls on which the wheel unit (20) is mounted for pivotal movement in a substantially vertical plane within the chamber.

## Patentansprüche

1. Wagen (10) für eine Rollbewegung auf einer darunterliegenden Fläche (12), wobei der genannte Wagen einen Sitz als Träger für ein Kind oder einen anderen Sitzbenutzer, einen Grundkörper (18) für die Abstützung des Sitzes sowie Rollmittel aufweist, um den Grundkörper oberhalb der darunterliegenden Fläche drehbar zu lagern, dadurch gekennzeichnet, daß die Rollmittel (20) in Abhängigkeit vom Bewegen eines Teils der Rollmittel über eine Endkante (14) der darunterliegenden Fläche (12) klappbar sind, um einen benachbarten Teil des Grundkörpers (18) zur Reibungsberührung mit der darunterliegenden Fläche abzusenken, so daß eine weitere Rollbewegung des Wagens (10) auf der darunterliegenden Fläche unterbunden wird.

2. Wagen (10) nach Anspruch 1, bei dem die den Rollmitteln benachbarten Teile des Grundkörpers (18) ein Kissen (32) hoher Reibung aufweisen, um in Abhängigkeit von der Klappbewegung der Rollmittel unter Reibschluß an der darunterliegenden Fläche (12) anzugreifen.

3. Wagen (10) nach Anspruch 1 oder 2, bei dem die Rollmittel (20) eine Mehrzahl von Tragbeinen (34) aufweisen, von denen jedes schwenkbar mit dem Grundkörper (18) für eine Bewegung um eine Schwenkachse (44) verbunden ist, und wobei zwei Laufräder (46) an jedem Tragbein in beidseits von der Schwenkachse des Tragbeins befindlicher Lageanordnung befestigt sind und jedes Tragbein um seine Achse in Abhängigkeit davon schwenkbar ist, daß eines der Laufräder der Rollmittel über die Endkante (14) der darunterliegenden Fläche (12) bewegt wird, um die Klappbewegung der Rollmittel hervorzurufen.

4. Wagen (10) nach Anspruch 3, bei dem die Tragbeine (34) an dem Grundkörper (18) längs des Umfangs in gegenseitigen Abständen angeordnet sind.

5. Wagen (10) nach Anspruch 3 oder 4, bei dem jedes Tragbein (34) zueinander entgegengesetzte distale Enden (36, 38) besitzt und ein Rad (46) an jedem der einander entgegengesetzten distalen Enden in im wesentlichen abstandsgleicher Lagebeziehung zu der Schwenkachse (44) des Tragbeines befestigt ist.

6. Wagen (10) nach irgendeinem vorausgehenden Anspruch, bei dem der Grundkörper (18) sechseckig geformt ist und die Rollmittel (20) drei Tragbeine (34) aufweisen, die schwenkbar mit dem sechseckigen Grundkörper so verbunden sind, daß sie im wesentlichen in einer Dreieckbeziehung gelegen sind.

7. Wagen (10) nach irgendeinem vorausgehenden Anspruch, außerdem Alarmmittel (50) aufweisend, um eine Klappbewegung eines Teils der Rollmittel anzuzeigen, um in der Nähe befindliche Personen darauf aufmerksam zu machen, daß der Teil der Rollmittel die Endkante (14) der darunterliegenden Fläche (12) überlaufen hat.

8. Wagen (10) nach Anspruch 7, bei dem die Alarmmittel (50) akustische Mittel zum Aussenden einer hörbaren Warnung für in der Nähe befindliche Personen aufweisen, um die Klappbewegung der Rollmittel (20) anzuzeigen.

9. Wagen (10) nach Anspruch 1, bei dem der Grundteil (18) einen Teil eines Rahmens bildet, um den Sitz über die darunterliegende Fläche (12) anzuheben, so daß ein Sitzbenutzer in die Lage versetzt wird, die darunterliegende Fläche zu berühren, um den Wagen anzutreiben, und wobei die genannten Rollmittel eine Mehrzahl von Radeinheiten (20) aufweisen.

10. Wagen (10) nach Anspruch 9, bei dem der Teil des Grundkörpers ein Kissen (32) hoher Reibung aufweist, das der darunterliegenden Fläche (12) zugekehrt ist, um mit dieser reibschlüssig in Eingriff zu kommen.

11. Wagen (10) nach Anspruch 9 oder 10, bei dem jede Radeinheit (20) um eine zentrale, horizontale Schwenkachse (44) schwenkbar ist und ihre Räder (46) an entgegengesetzten Enden (36, 34) der Radeinheit im Abstand zu der zentralen, horizontalen Schwenkachse angebracht sind.

12. Wagen (10) nach irgendeinem der Ansprüche 9 bis 11, bei dem der Grundkörper (18) ein geschlossener Ringkörper mit einer inneren Wandung (24) und einer äußeren Wandung (26) ist, die im Abstand zu der inneren Wandung gelegen ist, um dazwischen eine Kammer (30) zu bilden, und wobei jede Kupplungseinrichtung einen mit der inneren und äußeren Wandung drehbar verbundenen Schwenkzapfen (44) aufweist, an dem die Radeinheit (20) für eine Schwenkbewegung in einer im wesentlichen vertikalen Ebene innerhalb der Kammer angebracht ist.

**Revendications**

1. Trotteur pour enfant (10) destiné à rouler sur une surface de sol (12), ce trotteur comprenant un siège pour porter un enfant ou autre occupant, une base (18) pour supporter le siège, et des moyens du roulement pour supporter et faire rouler la base sur la surface de sol, trotteur caractérisé en ce que les moyens de roulement (20) peuvent plier et fléchir lorsqu'une partie de ces moyens de roulement vient rouler sur un bord de limite (14) de la surface de sol (12), de manière à abaisser une partie adjacente de la base (18) pour l'amener en contact de frottement avec la surface de sol et empêcher ainsi la poursuite de mouvement de roulement du trotteur (10) sur la surface de sol.

2. Trotteur pour enfant (10) selon la revendication 1, caractérisé en ce que les parties de la base (18) qui sont situées au voisinage des moyens de roulement comprennent un bourrelet à fort coefficient de frottement (32) destiné à venir frotter sur la surface de sol (12) lorsque les moyens de roulement tombent.

3. Trotteur pour enfant (10) selon l'une quelconque des revendications 1 et 2, caractérisé en ce que les moyens de roulement (20) comprennent plusieurs bras de support (34), chacun de ces bras de support étant monté en pivotement sur la base (18) de manière à tourner sur un axe de pivot (44), et une paire de roues de trotteur (46) étant montées sur chaque bras de support de manière à venir à cheval sur l'axe de pivot du bras de support, chaque bras de support pivotant sur son axe lorsque l'un des roues de trotteur vient rouler sur le bord de limite (14) de la surface de sol (12), de manière à faire tomber les moyens de roulement.

4. Trotteur pour enfant (10) selon la revendication 3, caractérisé en ce que les bras de support (34) sont montés sur la base (18) dans une disposition d'espacement circulaire.

5. Trotteur pour enfant (10) selon l'une quelconque des revendications 3 et 4, caractérisé en ce que chaque bras support (34) comporte des extrémités distantes opposées (36, 38) sur chacune desquelles une roue (46) est montée dans une disposition d'égal espacement par rapport à l'axe de pivot (44) du bras de support.

6. Trotteur pour enfant (10) selon l'une quelconque des revendications précédentes, caractérisé en ce que la base (18) est de forme hexagonale et en ce que les moyens de roulement (20) comprennent trois bras de support (34) montés en pivotement sur la base hexagonale de manière à se trouver dans une disposition essentiellement triangulaire.

7. Trotteur pour enfant (10) selon l'une quelconque des revendications précédentes, caractérisé en ce qu'il comprend en outre des moyens d'alarme (50) pour indiquer le fléchissement d'une partie des moyens de roulement de manière à prévenir les personnes situées à proximité que cette partie des moyens de roulement est passée par dessus le bord de limite (14) de la surface de sol (12).

8. Trotteur pour enfant (10) selon la revendication 7, caractérisé en ce que les moyens d'alarme (50) comprennent des moyens sonores destinés à envoyer un signal d'avertissement audible aux personnes situées à proximité, de manière à indiquer la chute des moyens de roulement (20).

9. Trotteur pour enfant (10) selon la revendication 1, caractérisé en ce que la base (18) fait partie de moyens de châssis destinés à soulever le siège au-dessus de la surface de sol (12) pour permettre à un occupant assis sur le siège de toucher la surface du sol de manière à propulser le trotteur et en ce que les moyens de roulement comprennent un certain nombre de blocs de roues (20).

10. Trotteur pour enfant (10) selon la revendication 9, caractérisé en ce que la partie concernée de la base comporte un bourrelet à fort coefficient de frottement (32) tourné vers la surface de sol (12) pour venir frotter sur celle-ci.

11. Trotteur pour enfant (10) selon l'une quelconque des revendications 9 et 10, caractérisé en ce que chaque bloc de roues (20) peut pivoter sur un axe de pivot horizontal central (44), et en ce que ses roues (46) sont montées aux extrémitiés opposées (36, 38) du bloc de roues dans une disposition d'espacement par rapport à l'axe de pivot horizontal.

12. Trotteur pour enfant (10) selon l'une quelconque des revendications 9 à 11, caractérisé en ce que la base (18) consiste en un élément annulaire continu comportant une paroi intérieure (24) et une paroi extérieure (26) placées dans une disposition d'espacement par rapport à la paroi intérieure pour former une chambre (30) entre les deux, et en ce que chaque moyen d'accouplement comprend une tige de pivot (44) montée en rotation sur les parois intérieure et extérieure, et sur laquelle le bloc de roues (20) est monté de manière à effectuer un mouvement de pivotement dans un plan essentiellement vertical à l'intérieur de la chambre.

FIG.1

FIG. 2

FIG.3

FIG. 5

FIG. 6

FIG. 4